# FASCICULE DE BREVET EUROPEEN

(11) **EP 2 590 827 B1**
(45) Date de publication et mention de la délivrance du brevet: **10.12.2014**
(21) Numéro de dépôt: 11729984.2
(22) Date de dépôt: 05.07.2011
(51) Int. Cl.: B60C 9/18, B60C 9/22, B60C 19/00, B60C 23/19

(54) **ARMATURE DE SOMMET POUR PNEUMATIQUE D'AVION**
GÜRTELVERSTÄRKUNG FÜR EINEN FLUGZEUGREIFEN
CROWN REINFORCEMENT FOR AIRCRAFT TYRE

(30) Priorité: 07.07.2010 FR 1055494
(43) Date de publication de la demande: 15.05.2013
(73) Titulaire: Compagnie Générale des Etablissements Michelin, 63000 Clermont-Ferrand (FR); Michelin Recherche et Technique S.A., 1763 Granges-Paccot (CH)
(72) Inventeur: ESTENNE, Vincent, F-63040 Clermont Ferrand Cedex 9 (FR); BUCHER, Laurent, F-63040 Clermont Ferrand Cedex 09 (FR)
(74) Mandataire: Le Cam, Stéphane Georges Elie
(86) Numéro de dépôt international: PCT/EP2011/061270
(87) Numéro de publication internationale: WO 2012/004237

(56) Documents cités:
- DE-A1-102007 049 872
- DE-U1-202004 011 400
- US-A- 2 423 995
- US-A- 3 515 195
- US-A1- 2007 235 116

## Description

La présente invention concerne un pneumatique pour avion, et, en particulier, l'armature de sommet d'un pneumatique pour avion comprenant des couches d'éléments de renforcement textiles.

Un pneumatique ayant une géométrie de révolution par rapport à un axe de rotation, la géométrie du pneumatique peut être décrite dans un plan méridien contenant l'axe de rotation du pneumatique. Pour un plan méridien donné, les directions radiale, axiale et circonférentielle désignent respectivement les directions perpendiculaire à l'axe de rotation du pneumatique, parallèle à l'axe de rotation du pneumatique et perpendiculaire au plan méridien. Dans ce qui suit, les expressions « radialement intérieur » et « radialement extérieur» signifient respectivement « plus proche de l'axe de rotation du pneumatique, selon la direction radiale » et « plus éloigné de l'axe de rotation du pneumatique, selon la direction radiale ». Les expressions « axialement intérieur » et « axialement extérieur» signifient respectivement « plus proche du plan équatorial, selon la direction axiale » et « plus éloigné du plan équatorial, selon la direction axiale », le plan équatorial étant le plan perpendiculaire à l'axe de rotation du pneumatique et passant par le milieu de la surface de roulement du pneumatique.

Un pneumatique pour avion se caractérise par une pression nominale supérieure à 9 bars et un taux de flèche nominal supérieur ou égal à 32%. La pression nominale est la pression de gonflage nominale du pneumatique telle que définie, par exemple, par la norme de la Tire and Rim Association ou TRA. Le taux de flèche nominal d'un pneumatique est, par définition, sa déformation radiale, ou sa variation de hauteur radiale, lorsque celui-ci passe d'un état gonflé non chargé à un état gonflé chargé en statique, dans les conditions de pression et de charge nominales telles que définies, par exemple, par la norme TRA. Elle est exprimée sous la forme d'une flèche relative, définie par le rapport de cette variation de la hauteur radiale du pneumatique sur la moitié de la différence entre le diamètre extérieur du pneumatique et le diamètre maximum de la jante mesuré sur le rebord de jante. Le diamètre extérieur du pneumatique est mesuré en statique dans un état non chargé gonflé à la pression nominale.

Un pneumatique comprend, de façon générale, un sommet comprenant une bande roulement destinée à venir en contact avec le sol par l'intermédiaire d'une surface de roulement, deux bourrelets destinés à venir en contact avec une jante et deux flancs reliant le sommet aux bourrelets. Un pneumatique radial, telle que généralement utilisé pour un avion, comprend plus particulièrement une armature de carcasse radiale et une armature de sommet, telles que décrites, par exemple, dans le document EP1381525.

L'armature de carcasse radiale est la structure de renforcement du pneumatique reliant les deux bourrelets du pneumatique. L'armature de carcasse radiale d'un pneumatique pour avion comprend généralement au moins une couche d'armature de carcasse, chaque couche d'armature de carcasse étant constituée d'éléments de renforcement le plus souvent textiles, parallèles entre eux et faisant, avec la direction circonférentielle, un angle compris entre 80° et 100°.

L'armature de sommet est la structure de renforcement du pneumatique radialement intérieure à la bande de roulement et au moins en partie radialement extérieure à l'armature de carcasse radiale. L'armature de sommet d'un pneumatique pour avion comprend généralement au moins une couche d'armature de sommet, chaque couche d'armature de sommet étant constituée d'éléments de renforcement parallèles entre eux et enrobés dans un matériau polymérique d'enrobage. Parmi les couches d'armature de sommet, on distingue les couches d'armature de travail composant l'armature de travail, constituées le plus souvent d'éléments de renforcement textiles, et les couches d'armature de protection composant l'armature de protection, constituées d'éléments de renforcement métalliques ou textiles et disposées radialement à l'extérieur de l'armature de travail.

Lors de la fabrication d'un pneumatique pour avion, une couche d'armature de travail est le plus souvent réalisée par un enroulement en zigzag ou par un enroulement en spires de bandelettes constituées d'éléments de renforcement textiles, autour d'un dispositif de fabrication cylindrique, en opérant une translation de direction axiale de la bandelette à chaque tour d'enroulement, de façon à obtenir la largeur axiale attendue de couche d'armature de travail. La couche d'armature de travail est ainsi constituée de bandelettes axialement juxtaposées. Par enroulement en zigzag, on entend un enroulement, selon une courbe formée d'ondulations périodiques, soit sur une demi période par tour d'enroulement, soit sur une période par tour d'enroulement, l'angle des éléments de renforcement textiles des bandelettes étant généralement compris entre 8° et 30° par rapport à la direction circonférentielle. Pour une couche d'armature de travail réalisée par enroulement en spires, l'angle des éléments de renforcement textiles des bandelettes est généralement compris entre 0° et 8° par rapport à la direction circonférentielle. Quel que soit le type d'enroulement des bandelettes, l'angle des éléments de renforcement textiles des bandelettes est généralement inférieur à 30° par rapport à la direction circonférentielle. Pour cette raison, les bandelettes ainsi que la couche de travail résultante sont dites globalement circonférentielles, c'est-à-dire de direction générale circonférentielle avec des ondulations d'amplitude limitée autour de la direction circonférentielle.

Les éléments de renforcement des couches d'armature de travail sont parallèles entre eux, c'est-à-dire que la distance entre les courbes géométriques de deux éléments de renforcement adjacents est constante, les courbes géométriques pouvant présenter des ondulations périodiques.

Les éléments de renforcement des couches d'armature de carcasse et des couches d'armature de travail, pour les pneumatiques d'avion, sont le plus souvent des câbles constitués de filés de filaments textiles, préférentiellement en polyamides aliphatiques ou en polyamides aromatiques. Les éléments de renforcement des couches d'armature de protection peuvent être soit des câbles constitués de fils métalliques, soit des câbles constitués de filés de filaments textiles.

Les propriétés mécaniques en extension (module, allongement et force à la rupture) des éléments de renforcement textiles sont mesurées après un conditionnement préalable. Par "conditionnement préalable", on entend le stockage des éléments de renforcement textiles pendant au moins 24 heures, avant mesure, dans une atmosphère standard selon la norme européenne DIN EN 20139 (température de 20 ± 2°C ; hygrométrie de 65 ± 2 %). Les mesures sont réalisées de manière connue à l'aide d'une machine de traction ZWICK GmbH & Co (Allemagne) de type 1435 ou de type 1445. Les éléments de renforcement textiles subissent une traction sur une longueur initiale de 400 mm à une vitesse nominale de 200 mm/min. Tous les résultats sont une moyenne de 10 mesures.

Un matériau polymérique, tel que le matériau polymérique d'enrobage des éléments de renforcement textiles des couches d'armature de travail, est caractérisé mécaniquement, après cuisson, par des caractéristiques de contrainte-déformation en traction, déterminées par des essais de traction. Ces essais de traction sont effectués, sur une éprouvette, selon une méthode connue de l'homme du métier, par exemple conformément à la norme internationale ISO 37, et dans les conditions normales de température (23 + ou - 2°C) et d'hygrométrie (50 + ou -5% d'humidité relative), définies par la norme internationale ISO 471. On appelle module d'élasticité ou module d'extension à 10% d'allongement d'un mélange polymérique, exprimé en méga pascals (MPa), la contrainte de traction mesurée pour un allongement de 10% de l'éprouvette.

En utilisation, les sollicitations mécaniques de roulage, résultant de l'action combinée de la pression nominale, de la charge appliquée au pneumatique pouvant varier entre 0 et 2 fois la charge nominale, et de la vitesse de l'avion, induisent des cycles de tensions dans les éléments de renforcement des couches d'armature de travail.

Ces cycles de tensions génèrent, dans le matériau polymérique d'enrobage des éléments de renforcement des couches d'armature de travail, des sources de chaleur, en particulier aux extrémités axiales des couches d'armature de travail. Ces sources de chaleur sont des points chauds localisés pour lesquels l'évacuation de la chaleur est difficile, car la chaleur doit pouvoir se propager soit à travers le matériau polymérique d'enrobage, soit à travers les éléments de renforcement textiles. Or le matériau polymérique d'enrobage, en raison de sa faible conductivité thermique, est un mauvais conducteur de chaleur. De même, les éléments de renforcement textiles, en raison de leur faible conductivité thermique, ne peuvent contribuer efficacement à l'évacuation de la chaleur. Il en résulte un échauffement excessif du matériau polymérique d'enrobage, dommageable à sa bonne tenue mécanique et susceptible d'entraîner sa dégradation, et, par conséquent, une déchéance prématurée du pneumatique.

Diverses solutions techniques ont été envisagées pour créer un chemin d'évacuation de la chaleur générée au niveau de l'armature de travail. Les documents EP1031441 et JP2007131282 présentent des matériaux polymériques thermo conducteurs, à conductivité thermique augmentée. Le document EP1548057 propose des matériaux polymériques incluant des nanotubes de carbone permettant d'augmenter la conductivité thermique. Le document EP1483122 décrit un drain thermique, sous forme de câbles métalliques disposés dans un plan méridien, et inséré à l'extrémité de l'armature de travail. Enfin, le document KR812810 propose un insert thermoconducteur, pouvant être métallique et disposé en extrémité d'armature de travail.

Les inventeurs se sont donnés pour objectif d'améliorer l'évacuation de la chaleur générée dans l'armature de travail d'un pneumatique pour avion, depuis les points les plus chauds, généralement localisés en extrémités des couches d'armatures de travail, vers les points les moins chauds, généralement localisés dans la zone centrale de l'armature de travail, afin d'obtenir une répartition plus homogène des températures dans le sommet du pneumatique, tout en minimisant l'impact sur les sollicitations mécaniques de l'armature de travail.

Cet objectif a été atteint, selon l'invention, par un pneumatique pour avion, comprenant :
- un sommet destiné à entrer en contact avec le sol par l'intermédiaire d'une bande dé roulement et relié par deux flancs à deux bourrelets destinés à entrer en contact avec une jante,
- une armature de carcasse radiale reliant les deux bourrelets,
- une armature de sommet, radialement intérieure à la bande de roulement et radialement extérieure à l'armature de carcasse radiale, comprenant une armature de travail et une armature de protection,

- l'armature de travail, radialement intérieure à l'armature de protection, comprenant au moins une couche d'armature de travail,
- chaque couche d'armature de travail étant constituée de bandelettes globalement circonférentielles, axialement juxtaposées,
- chaque bandelette étant constituée d'éléments de renforcement textiles parallèles entre eux enrobés par un matériau polymérique d'enrobage,
- chaque bandelette d'au moins une couche d'armature de travail étant en contact, sur au moins sa face axiale radialement intérieure, avec un élément de transfert thermique, comprenant au moins un matériau conducteur de chaleur,
- la conductivité thermique d'un matériau conducteur de chaleur d'un élément de transfert thermique étant au moins égale à 50 fois la conductivité thermique du matériau polymérique d'enrobage des éléments de renforcement textiles de la bandelette en contact avec l'élément de transfert thermique,
- le produit de l'épaisseur d'un élément de transfert thermique par le module d'extension d'un élément de transfert thermique est au plus égal à 0.3 fois le produit de l'épaisseur de la bandelette par le module d'extension de la bandelette.

Selon l'invention, chaque bandelette d'au moins une couche d'armature de travail est avantageusement en contact avec un élément de transfert thermique, sur au moins sa face axiale radialement intérieure, c'est-à-dire la face de la bandelette parallèle à l'axe de rotation du pneumatique et radialement la plus proche de l'axe de rotation du pneumatique.

Un élément de transfert thermique assure une fonction d'évacuation de chaleur grâce à la présence d'au moins un matériau conducteur de chaleur. L'élément de transfert thermique n'est pas nécessairement constitué exclusivement de matériaux conducteurs de chaleur.

Par matériau conducteur de chaleur, on entend un matériau dont la conductivité thermique est élevée, tel que, par exemple, un matériau métallique. La conductivité thermique d'un matériau est une grandeur physique, exprimée en W.m⁻¹.K⁻¹, caractérisant l'aptitude d'un matériau à transporter des calories. Un matériau conducteur de chaleur est d'autant plus performant en terme de transport de calories que sa conductivité thermique est élevée.

A contrario, par matériau non conducteur de chaleur ou, plus exactement, faiblement conducteur de chaleur, on entend un matériau dont la conductivité thermique est faible, tel que, par exemple, un matériau polymérique conventionnel, classiquement utilisé dans un pneumatique.

La chaleur ou énergie calorifique générée à une extrémité axiale de la couche d'armature de travail est évacuée par l'élément de transfert thermique en contact avec la bandelette située en extrémité axiale de la couche d'armature de travail, puis transmise progressivement, axialement vers l'intérieur, aux éléments de transfert thermique en contact avec les bandelettes plus axialement intérieures et axialement juxtaposées. Les bandelettes ayant une direction globalement circonférentielle, les éléments de transfert thermique respectifs en contact avec lesdites bandelettes vont répartir circonférentiellement la chaleur générée aux extrémités axiales de la couche d'armature de travail. Ainsi, la chaleur générée aux extrémités axiales de la couche d'armature de travail est évacuée, par les éléments de transfert thermique respectivement en contact avec les bandelettes juxtaposées, à la fois axialement et circonférentiellement, d'où une homogénéisation des températures à la fois dans la largeur axiale de la couche d'armature de travail, entre ses extrémités axiales et sa partie centrale, et sur la circonférence de la couche d'armature de travail.

Ce transfert thermique, qui vise à homogénéiser les températures entre les extrémités axiales et le centre de la couche d'armature de travail, est possible car les températures sont plus élevées entre les extrémités axiales et le centre de la couche d'armature de travail, d'où un gradient de températures à l'origine de la conduction de chaleur.

Pour que les calories soient évacuées préférentiellement par les éléments de transfert thermique en contact avec les bandelettes constitutives d'une couche d'armature de travail, la conductivité thermique d'un matériau conducteur de chaleur d'un élément de transfert thermique doit être significativement supérieure à celle du matériau polymérique d'enrobage des éléments de renforcement textiles de la bandelette en contact avec l'élément de transfert thermique, le matériau polymérique d'enrobage étant par nature faiblement conducteur de chaleur. Les inventeurs ont montré qu'une conductivité thermique d'un matériau conducteur de chaleur au moins égale à 50 fois celle du matériau polymérique d'enrobage des éléments de renforcement textiles de la bandelette en contact avec l'élément de transfert thermique permettait d'évacuer une quantité de calories suffisante pour abaisser le niveau thermique en extrémité axiale de couche d'armature de travail à un niveau acceptable, c'est-à-dire non susceptible d'entraîner une dégradation des matériaux concernés.

Encore selon l'invention, le produit de l'épaisseur d'un élément de transfert thermique par le module d'extension d'un élément de transfert thermique est au plus égal à 0.3 fois le produit de l'épaisseur de la bandelette par le module d'extension de la bandelette.

Le module d'extension est défini comme la pente de la droite tangente à la courbe de traction, définissant la force d'extension en fonction de l'allongement, au point de la courbe de traction correspondant à une force d'extension de 50 daN.

Cette caractéristique permet de limiter la contribution de l'élément de transfert thermique à la rigidité d'extension circonférentielle globale de l'assemblage de la bandelette et de l'élément de transfert thermique. En d'autres termes, la présence de l'élément de transfert thermique a un impact limité sur les sollicitations mécaniques auxquelles est soumise la bandelette.

En effet, en faisant le produit de l'épaisseur, du module d'extension et de l'allongement de la bandelette, on obtient l'effort circonférentiel par unité de largeur axiale de la bandelette. De façon analogue, en faisant le produit de l'épaisseur, du module d'extension et de l'allongement de l'élément de transfert thermique, on obtient l'effort circonférentiel par unité de largeur axiale de l'élément de transfert thermique. L'allongement étant identique pour la bandelette et l'élément de transfert thermique, il en résulte que l'effort circonférentiel par unité de largeur axiale, ou tension répartie, de l'élément de transfert thermique est ainsi au plus égal à 0.3 fois l'effort circonférentiel par unité de largeur axiale de la bandelette en contact avec l'élément de transfert thermique. En d'autres termes, la contribution mécanique de l'élément de transfert thermique reste ainsi limitée à 30% de celle de la bandelette dans la reprise d'effort circonférentiel.

Avantageusement, chaque bandelette de chaque couche d'armature de travail est en contact, sur au moins sa face axiale radialement intérieure, avec un élément de transfert thermique, comprenant au moins un matériau conducteur de chaleur. La chaleur générée aux extrémités axiales de chacune des couches d'armature de travail, et non seulement celle générée aux extrémités axiales ayant les températures les plus élevées, est avantageusement évacuée, en vue d'une homogénéisation des températures au niveau de chaque couche d'armature de travail et donc dans toute l'épaisseur de l'armature radiale.

Encore avantageusement, un élément de transfert thermique est constitué d'au moins une bande métallique globalement circonférentielle. Une bande est un élément s'étendant sur toute la périphérie d'une bandelette et de section méridienne rectangulaire, dont la plus petite dimension, dans un plan méridien, est de direction radiale et la plus grande dimension, dans un plan méridien, est de direction axiale. Une bande métallique est constituée d'un matériau métallique. Une bande globalement circonférentielle suit le trajet globalement circonférentiel de la bandelette avec laquelle elle est en contact.

Un premier mode de réalisation préféré est d'avoir un élément de transfert thermique constitué d'une bande métallique globalement circonférentielle unique, dont la largeur axiale est égale à la largeur axiale de la bandelette en contact avec l'élément de transfert thermique. Un tel mode de réalisation dans lequel la largeur axiale de la bande métallique globalement circonférentielle unique est égale à la largeur axiale de la bandelette est avantageux au niveau de la fabrication du pneumatique. En effet, un assemblage préalable de la bandelette et de la bande métallique globalement circonférentielle unique peut être réalisé au niveau élémentaire de la bandelette, puis l'assemblage ainsi réalisé de la bandelette et de la bande métallique globalement circonférentielle unique peut être enroulé sur le dispositif cylindrique permettant de réaliser la couche d'armature de travail. En outre, la continuité de la conduction de chaleur dans les directions circonférentielle et axiale est assurée par la continuité de chaque bande métallique globalement circonférentielle unique, et par l'enroulement circonférentiel spiroïdal ou en zigzag de la bandelette. Ainsi, ce mode de réalisation permet une évacuation optimale de la chaleur générée en extrémités de couche d'armature de travail à la fois dans la direction axiale et dans la direction circonférentielle.

Selon un second mode de réalisation de l'invention, un élément de transfert thermique est constitué d'une pluralité de bandes métalliques globalement circonférentielles axialement juxtaposées, dont la somme des largeurs axiales est au plus égale à la largeur axiale de la bandelette en contact avec l'élément de transfert thermique. Ce mode de réalisation est équivalent en terme de conduction de chaleur au mode de réalisation précédent à bande métallique globalement circonférentielle unique. En outre, une juxtaposition de bandes métalliques globalement circonférentielles élémentaires présente avantageusement une rigidité de flexion autour d'une direction radiale plus faible qu'une bande métallique globalement circonférentielle unique, ce qui implique un impact plus faible sur la rigidité de flexion autour d'une direction radiale de la bandelette et donc sur la rigidité de flexion autour d'une direction radiale de la couche d'armature de travail : d'où un moindre impact de l'introduction des éléments de transfert thermique sur le comportement mécanique de l'armature de travail.

Un troisième mode de réalisation de l'invention est caractérisé par un élément de transfert thermique constitué d'une pluralité de bandes métalliques globalement circonférentielles axialement disjointes, réparties sur la largeur axiale de la bandelette en contact avec l'élément de transfert thermique. Dans ce mode de réalisation, un élément de transfert thermique est ainsi constitué d'une pluralité de bandes métalliques globalement circonférentielles deux à deux disjointes selon la direction axiale: ce qui implique que la somme des largeurs axiales des bandes métalliques globalement circonférentielles est inférieure à la largeur axiale de la bandelette avec laquelle les bandes métalliques globalement circonférentielles sont en contact. Du fait de cette discontinuité géométrique entre les bandes métalliques globalement circonférentielles, la conduction de la chaleur n'est pas assurée de façon continue selon la direction axiale, mais est assurée de façon continue selon la direction circonférentielle. Toutefois, un tel mode de réalisation permet d'avoir des rigidités de l'élément de transfert thermique, constitué de bandes métalliques globalement circonférentielles disjointes, inférieures à celles d'un élément de transfert thermique, constitué d'une bande métallique globalement circonférentielle unique. Comme dans le deuxième mode de réalisation, la rigidité de flexion autour d'une direction radiale d'une pluralité de bandes métalliques globalement circonférentielles deux à deux disjointes est inférieure à la rigidité de flexion autour d'une direction radiale d'une bande métallique globalement circonférentielle unique. De plus la rigidité d'extension circonférentielle de l'élément de transfert thermique, selon ce mode de réalisation, a une faible contribution à la rigidité d'extension circonférentielle de l'assemblage de la bandelette et de l'élément de transfert thermique : ce qui permet un enroulement facilité de l'assemblage de la bandelette et de l'élément de transfert thermique autour du dispositif cylindrique lors de la fabrication de la couche d'armature de travail.

Selon une caractéristique optionnelle de l'invention, une bande métallique globalement circonférentielle comprend avantageusement des trous. Que l'élément de transfert thermique soit constitué d'une bande métallique globalement circonférentielle unique ou d'une pluralité de bandes métalliques globalement circonférentielles axialement juxtaposées ou disjointes, les trous percés dans chaque bande métallique globalement circonférentielle permettent de renforcer l'adhésion entre les deux bandelettes respectivement radialement extérieure et radialement intérieure à la bande métallique, par un contact direct, à travers les trous, entre les matériaux polymériques d'enrobage respectifs des deux bandelettes.

Selon une autre caractéristique optionnelle de l'invention, une bande métallique globalement circonférentielle comprend des trous circulaires. Outre l'avantage déjà cité en terme de rigidité d'extension circonférentielle de l'assemblage de la bandelette et de l'élément de transfert thermique, la réalisation de trous circulaires, par poinçonnage par exemple, est aisée sur le plan industriel.

Une bande métallique globalement circonférentielle comprend avantageusement des trous de diamètre au plus égal à la demi-largeur axiale de la bande, car la section des trous dans la bande métallique doit être limitée pour que la conduction de chaleur puisse être efficacement assurée.

Un matériau conducteur de chaleur d'un élément de transfert thermique est encore avantageusement métallique. Un matériau métallique, tel que, par exemple, l'aluminium, a une conductivité thermique égale environ à 200 W.m⁻¹.K⁻¹, alors qu'un matériau polymérique a une conductivité thermique égale à environ à 0.3 W.m⁻¹.K⁻¹.

Préférentiellement, un matériau conducteur de chaleur d'un élément de transfert thermique est l'aluminium caractérisé par une conductivité thermique élevée et une faible densité. L'aluminium nécessite un revêtement d'interface pour adhérer au matériau polymérique d'enrobage de la bandelette en contact ; à cette fin plusieurs techniques sont disponibles : revêtement de type laiton, de type organique (silane ou amino-silane), époxy ou colles commerciales.

Un élément de transfert thermique, constitué d'une ou plusieurs bandes métalliques globalement circonférentielles en aluminium, a avantageusement une épaisseur constante au plus égale à 0.1 mm, en vue de limiter la rigidité d'extension circonférentielle de l'élément de transfert thermique.

Enfin, il est avantageux que tout élément de transfert thermique présente, sur toute la circonférence, des oscillations géométriques périodiques dans un plan circonférentiel perpendiculaire à la direction axiale. Ces oscillations géométriques périodiques peuvent être, de façon non exhaustive, des plis en forme de V alternés ou des ondulations en forme de sinusoïde. La présence d'oscillations géométriques périodiques augmente la capacité d'extension circonférentielle de l'élément de transfert thermique et, par conséquent, diminue le risque de rupture en extension de l'élément de transfert thermique.

Avantageusement, le rapport entre l'amplitude crête-crête des oscillations géométriques périodiques et la longueur d'onde de la période est supérieur à 0.05 pour assurer à l'élément de transfert thermique une capacité d'extension circonférentielle suffisante.

Les caractéristiques et autres avantages de l'invention seront mieux compris à l'aide des figures annexées 1 à 5 :
- la figure 1 présente une coupe méridienne d'un sommet de pneumatique selon l'invention, schématisant en particulier les bandelettes d'une couche d'armature de travail et les bandes globalement circonférentielles d'élément de transfert thermique correspondantes.
- la figure 2 est un schéma de l'assemblage d'une bandelette de couche d'armature de travail et d'un élément de transfert thermique selon un premier mode de réalisation de l'invention.
- la figure 3 est un schéma de l'assemblage d'une bandelette de couche d'armature de travail et d'un élément de transfert thermique selon un deuxième mode de réalisation de l'invention.
- la figure 4 est un schéma de l'assemblage d'une bandelette de couche d'armature de travail et d'un élément de transfert thermique selon un troisième mode de réalisation de l'invention.
- la figure 5 est un schéma d'une variante d'un élément de transfert thermique.

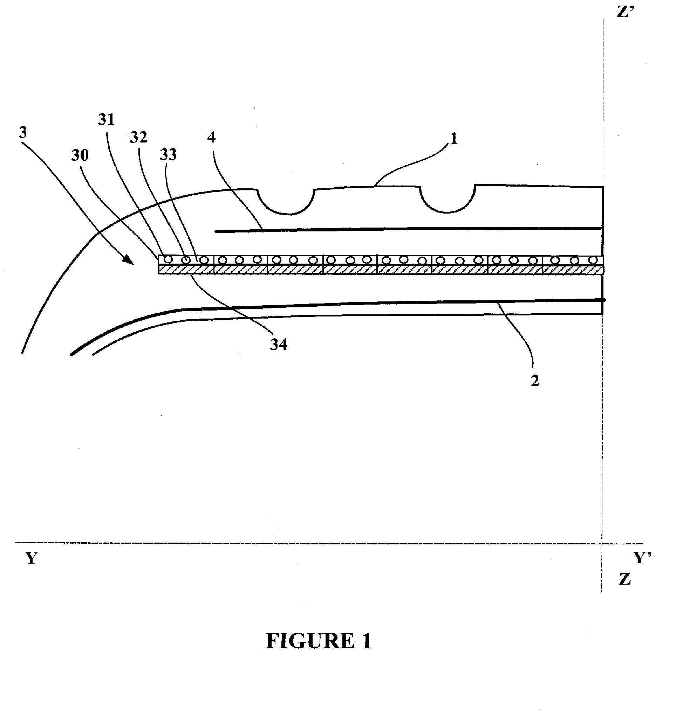

Les figures 1 à 5 ne sont pas représentées à l'échelle, en vue de faciliter la compréhension de l'invention.

La figure 1 présente une coupe méridienne, c'est-à-dire dans un plan méridien, du sommet d'un pneumatique selon l'invention. Elle représente un sommet destiné à entrer en contact avec le sol par l'intermédiaire d'une bande de roulement 1, l'armature de carcasse radiale 2, l'armature de sommet, radialement intérieure à la bande de roulement et radialement extérieure à l'armature de carcasse radiale, comprenant une armature de travail 3 et une armature de protection 4. L'armature de travail 3, constituée d'une superposition de couches d'armature de travail, n'est pas intégralement représentée : une seule couche d'armature de travail 30 est représentée en vue de faciliter la compréhension de l'invention. La couche d'armature de travail est constituée de bandelettes 31 globalement circonférentielles, axialement juxtaposées. Chaque bandelette est constituée d'éléments de renforcement textiles 32 parallèles entre eux enrobés par un matériau polymérique d'enrobage 33. Chaque bandelette est en contact, sur sa face axiale radialement intérieure, avec un élément de transfert thermique 34.

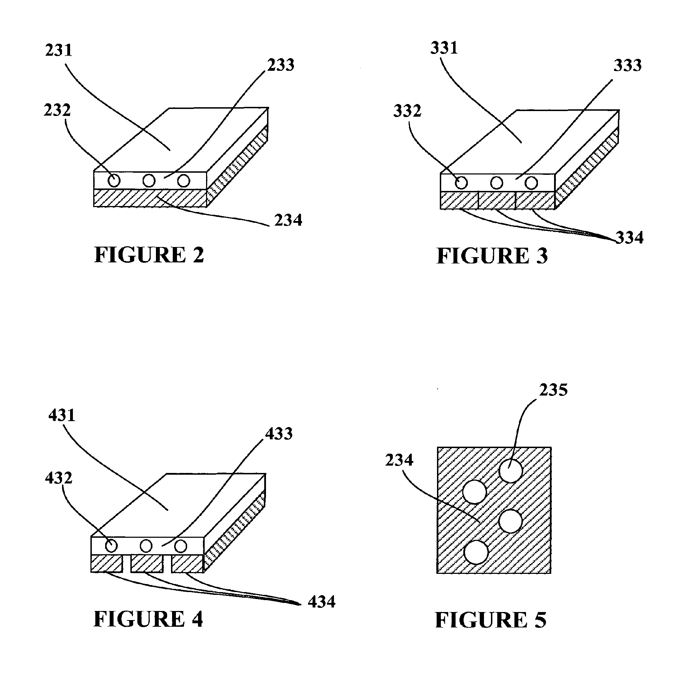

La figure 2 est un schéma de l'assemblage d'une bandelette 231 de couche d'armature de travail et d'un élément de transfert thermique 234 selon un premier mode de réalisation de l'invention. La bandelette, constituée d'éléments de renforcement textiles 232 parallèles entre eux enrobés par un matériau polymérique d'enrobage 233, est en contact, sur sa face axiale radialement intérieure, avec un élément de transfert thermique 234, constitué d'une bande métallique globalement circonférentielle unique, dont la largeur axiale est égale à la largeur axiale de la bandelette 231 en contact.

La figure 3 est un schéma de l'assemblage d'une bandelette 331 de couche d'armature de travail et d'un élément de transfert thermique 334 selon un deuxième mode de réalisation de l'invention. La bandelette, constituée d'éléments de renforcement textiles 332 parallèles entre eux enrobés par un matériau polymérique d'enrobage 333, est en contact, sur sa face axiale radialement intérieure, avec un élément de transfert thermique 334, constitué d'une pluralité de bandes métalliques globalement circonférentielles axialement juxtaposées, dont la largeur axiale totale, somme des largeurs axiales de chacune des bandes métalliques globalement circonférentielles, est égale à la largeur axiale de la bandelette 331 en contact.

La figure 4 est un schéma de l'assemblage d'une bandelette 431 de couche d'armature de travail et d'un élément de transfert thermique 434 selon un troisième mode de réalisation de l'invention. La bandelette, constituée d'éléments de renforcement textiles 432 parallèles entre eux enrobés par un matériau polymérique d'enrobage 433, est en contact, sur sa face axiale radialement intérieure, avec un élément de transfert thermique 434, constitué d'une pluralité de bandes métalliques globalement circonférentielles axialement disjointes, réparties sur la largeur axiale de la bandelette 431 en contact.

Enfin, la figure 5 représente un élément de transfert thermique 234, constitué d'une bande métallique globalement circonférentielle unique, comprenant des trous 235 circulaires.

Les inventeurs ont réalisé l'invention selon son premier mode de réalisation, pour un pneumatique d'avion de dimension 46x17R20, dont l'usage est caractérisé par une pression nominale égale à 15.9 bars, une charge statique nominale égale à 20473 daN et une vitesse de référence maximale de 225 km/h. L'armature de sommet de travail de ce pneumatique comprend 9 couches d'armature de travail, constituées de bandelettes globalement circonférentielles, 3 d'entre elles étant posées en spires juxtaposées selon la direction axiale, et 6 d'entre elles étant enroulées en zigzag, sur une période par tour d'enroulement, l'angle maximal des éléments de renforcement textiles des bandelettes étant égal à 11° par rapport à la direction circonférentielle. Chaque bandelette est constituée d'éléments de renforcement de type hybride c'est-à-dire constitués d'une combinaison de filés de filaments en polyamides aromatiques et de filés de filaments en polyamides aliphatiques, enrobés par un matériau polymérique d'enrobage dont la conductivité thermique est égale à 0.3 W.m⁻¹.K⁻¹. Chaque bandelette globalement circonférentielle est en contact, sur sa face radialement intérieure, avec un élément de transfert thermique, constitué d'une bande métallique en aluminium d'épaisseur 0.02 mm et de conductivité thermique égale à 237 W.m⁻¹.K⁻¹. La conductivité thermique de l'aluminium constitutif d'un élément de transfert thermique est environ égale à 600 fois la conductivité thermique du matériau polymérique d'enrobage des éléments de renforcement textiles de la bandelette en contact avec l'élément de transfert thermique.

Les inventeurs ont montré par simulation numérique par éléments finis sur un pneumatique en roulage stationnaire à une vitesse de 10 km/h, sous une charge statique nominale de 20.5 tonnes et une pression nominale de 15.9 bars, que l'écart de températures entre l'extrémité axiale et la partie centrale, au voisinage du plan équatorial, de la couche d'armature de travail la plus sollicitée thermiquement passe de 90.5 °C à 78.5°C quand on passe du pneumatique de référence, avec des bandelettes sans élément de transfert thermique, au pneumatique selon l'invention. Dans l'exemple choisi, l'invention permet ainsi une diminution de 12°C de la température maximale en extrémité d'armature de sommet.

## Revendications

1. Pneumatique pour avion, comprenant :
- un sommet destiné à entrer en contact avec le sol par l'intermédiaire d'une bande de roulement (1) et relié par deux flancs à deux bourrelets destinés à entrer en contact avec une jante,
- une armature de carcasse radiale (2) reliant les deux bourrelets,
- une armature de sommet, radialement intérieure à la bande de roulement et radialement extérieure à l'armature de carcasse radiale, comprenant une armature de travail (3) et une armature de protection (4),
- l'armature de travail, radialement intérieure à l'armature de protection, comprenant au moins une couche d'armature de travail (30),
- chaque couche d'armature de travail étant constituée de bandelettes (31, 231, 331, 431) globalement circonférentielles, axialement juxtaposées,
- chaque bandelette étant constituée d'éléments de renforcement textiles (32, 232 , 332, 432) parallèles entre eux enrobés par un matériau polymérique d'enrobage (33, 233 , 333,433),
**caractérisé en ce que** chaque bandelette d'au moins une couche d'armature de travail est en contact, sur au moins sa face axiale radialement intérieure, avec un élément de transfert thermique (34, 234 , 334, 434), comprenant au moins un matériau conducteur de chaleur, **en ce que** la conductivité thermique d'un matériau conducteur de chaleur d'un élément de transfert thermique est au moins égale à 50 fois la conductivité thermique du matériau polymérique d'enrobage des éléments de renforcement textiles de la bandelette en contact avec l'élément de transfert thermique et **en ce que** le produit de l'épaisseur d'un élément de transfert thermique par le module d'extension d'un élément de transfert thermique est au plus égal à 0.3 fois le produit de l'épaisseur de la bandelette par le module d'extension de la bandelette.

2. Pneumatique selon la revendication 1, **caractérisé en ce que** chaque bandelette (31, 231, 331, 431) de chaque couche d'armature de travail (30) est en contact, sur au moins sa face axiale radialement intérieure, avec un élément de transfert thermique (34, 234, 334, 434), comprenant au moins un matériau conducteur de chaleur.

3. Pneumatique selon l'une quelconque des revendications 1 ou 2, **caractérisé en ce qu**'un élément de transfert thermique (34, 234, 334, 434) est constitué d'au moins une bande métallique globalement circonférentielle.

4. Pneumatique selon l'une quelconque des revendications 1 à 3, **caractérisé en ce qu**'un élément de transfert thermique est constitué d'une bande métallique globalement circonférentielle unique (34, 234), dont la largeur axiale est égale à la largeur axiale de la bandelette (31, 231) en contact avec l'élément de transfert thermique.

5. Pneumatique selon l'une quelconque des revendications 1 à 3, **caractérisé en ce qu**'un élément de transfert thermique est constitué d'une pluralité de bandes métalliques globalement circonférentielles axialement juxtaposées (334), dont la somme des largeurs axiales est au plus égale à la largeur axiale de la bandelette (331) en contact avec l'élément de transfert thermique.

6. Pneumatique selon l'une quelconque des revendications 1 à 3, **caractérisé en ce qu**'un élément de transfert thermique est constitué d'une pluralité de bandes métalliques globalement circonférentielles axialement disjointes (434), réparties sur la largeur axiale de la bandelette (431) en contact avec l'élément de transfert thermique.

7. Pneumatique selon l'une quelconque des revendications 3 à 6, **caractérisé en ce qu**'une bande métallique globalement circonférentielle (34, 234 , 334, 434) comprend des trous (235).

8. Pneumatique selon l'une quelconque des revendications 3 à 7, **caractérisé en ce qu**'une bande métallique globalement circonférentielle (34, 234 , 334, 434) comprend des trous (235) circulaires.

9. Pneumatique selon l'une quelconque des revendications 3 à 8, **caractérisé en ce qu**'une bande métallique globalement circonférentielle (34, 234 , 334, 434) comprend des trous (235) de diamètre au plus égal à la moitié de la largeur de la bande.

10. Pneumatique selon l'une quelconque des revendications 1 à 9, **caractérisé en ce qu'**un matériau conducteur de chaleur d'un élément de transfert thermique (34, 234 , 334, 434) est métallique.

11. Pneumatique selon l'une quelconque des revendications 1 à 10, **caractérisé en ce qu**'un matériau conducteur de chaleur d'un élément de transfert thermique (34, 234, 334, 434) est l'aluminium.

12. Pneumatique selon la revendication 11, **caractérisé en ce qu**'un élément de transfert thermique (34, 234 , 334, 434) a une épaisseur au plus égale à 0.1 mm.

13. Pneumatique selon l'une quelconque des revendications 1 à 12, **caractérisé en ce que** tout élément de transfert thermique (34, 234 , 334, 434) présente des oscillations géométriques périodiques dans un plan circonférentiel perpendiculaire à la direction axiale.

## Patentansprüche

1. Flugzeugreifen, welcher umfasst:
- einen Scheitel, der dazu bestimmt ist, über einen Laufstreifen (1) mit dem Boden in Kontakt zu kommen, und über zwei Seitenwände mit zwei Wülsten verbunden ist, die dazu bestimmt sind, mit einer Felge in Kontakt zu kommen,
- eine radiale Karkassenbewehrung (2), welche die zwei Wülste verbindet,
- eine Scheitelbewehrung, die sich radial innerhalb des Laufstreifens und radial außerhalb der radialen Karkassenbewehrung befindet und die eine Arbeitsbewehrung (3) und eine Schutzbewehrung (4) umfasst,
- wobei die Arbeitsbewehrung, die sich radial innerhalb der Schutzbewehrung befindet, mindestens eine Arbeitsbewehrungsschicht (30) umfasst,
- wobei jede Arbeitsbewehrungsschicht aus Bändern (31, 231, 331, 431) besteht, die sich im Wesentlichen in Umfangsrichtung erstrecken und axial nebeneinander angeordnet sind,
- wobei jedes Band aus zueinander parallelen textilen Verstärkungselementen (32, 232, 332, 432) besteht, die mit einem polymeren Umhüllungsmaterial (33, 233, 333, 433) umhüllt sind,
**dadurch gekennzeichnet, dass** sich jedes Band mindestens einer Arbeitsbewehrungsschicht wenigstens auf seiner radial inneren axialen Seite mit einem Wärmeübertragungselement (34, 234, 334, 434) in Kontakt befindet, das mindestens ein wärmeleitendes Material umfasst, **dadurch, dass** die Wärmeleitfähigkeit eines wärmeleitenden Materials eines Wärmeübertragungselements mindestens gleich dem 50-Fachen der Wärmeleitfähigkeit des polymeren Umhüllungsmaterials der textilen Verstärkungselemente des mit dem Wärmeübertragungselement in Kontakt befindlichen Bandes ist, und **dadurch, dass** das Produkt der Dicke eines Wärmeübertragungselements mit dem Dehnungsmodul eines Wärmeübertragungselements höchstens gleich dem 0,3-Fachen des Produkts der Dicke des Bandes mit dem Dehnungsmodul des Bandes ist.

2. Reifen nach Anspruch 1, **dadurch gekennzeichnet, dass** sich jedes Band (31, 231, 331, 431) jeder Arbeitsbewehrungsschicht (30) wenigstens auf seiner radial inneren axialen Seite mit einem Wärmeübertragungselement (34, 234, 334, 434) in Kontakt befindet, das mindestens ein wärmeleitendes Material umfasst.

3. Reifen nach einem der Ansprüche 1 oder 2, **dadurch gekennzeichnet, dass** ein Wärmeübertragungselement (34, 234, 334, 434) aus mindestens einem, im Wesentlichen in Umfangsrichtung verlaufenden Metallband besteht.

4. Reifen nach einem der Ansprüche 1 bis 3, **dadurch gekennzeichnet, dass** ein Wärmeübertragungselement aus einem einzigen, im Wesentlichen in Umfangsrichtung verlaufenden Metallband (34, 234) besteht, dessen axiale Breite gleich der axialen Breite des Bandes (31, 231) ist, das sich mit dem Wärmeübertragungselement in Kontakt befindet.

5. Reifen nach einem der Ansprüche 1 bis 3, **dadurch gekennzeichnet, dass** ein Wärmeübertragungselement aus mehreren, im Wesentlichen in Umfangsrichtung verlaufenden, axial nebeneinander angeordneten Metallbändern (334) besteht, deren Summe der axialen Breiten höchstens gleich der axialen Breite des Bandes (331) ist, das sich mit dem Wärmeübertragungselement in Kontakt befindet.

6. Reifen nach einem der Ansprüche 1 bis 3, **dadurch gekennzeichnet, dass** ein Wärmeübertragungselement aus mehreren, im Wesentlichen in Umfangsrichtung verlaufenden, axial getrennten Metallbändern (434) besteht, die über die axiale Breite des Bandes (431) verteilt sind, das sich mit dem Wärmeübertragungselement in Kontakt befindet.

7. Reifen nach einem der Ansprüche 3 bis 6, **dadurch gekennzeichnet, dass** ein im Wesentlichen in Umfangsrichtung verlaufendes Metallband (34, 234, 334, 434) Löcher (235) umfasst.

8. Reifen nach einem der Ansprüche 3 bis 7, **dadurch gekennzeichnet, dass** ein im Wesentlichen in Umfangsrichtung verlaufendes Metallband (34, 234, 334, 434) kreisförmige Löcher (235) umfasst.

9. Reifen nach einem der Ansprüche 3 bis 8, **dadurch gekennzeichnet, dass** ein im Wesentlichen in Umfangsrichtung verlaufendes Metallband (34, 234, 334, 434) Löcher (235) mit einem Durchmesser umfasst, der höchstens gleich der Hälfte der Breite des Bandes ist.

10. Reifen nach einem der Ansprüche 1 bis 9, **dadurch gekennzeichnet, dass** ein wärmeleitendes Material eines Wärmeübertragungselements (34, 234, 334, 434) metallisch ist.

11. Reifen nach einem der Ansprüche 1 bis 10, **dadurch gekennzeichnet, dass** ein wärmeleitendes Material eines Wärmeübertragungselements (34, 234, 334, 434) Aluminium ist.

12. Reifen nach Anspruch 11, **dadurch gekennzeichnet, dass** ein Wärmeübertragungselement (34, 234, 334, 434) eine Dicke aufweist, die höchstens gleich 0,1 mm ist.

13. Reifen nach einem der Ansprüche 1 bis 12, **dadurch gekennzeichnet, dass** jedes Wärmeübertragungselement (34, 234, 334, 434) in einer zur axialen Richtung senkrechten Umfangsebene periodische geometrische Schwankungen aufweist.

## Claims

1. Aeroplane tyre comprising:
- a crown intended to come into contact with the ground via a tread (1) and connected by two sidewalls to two beads intended to come into contact with a rim,
- a radial carcass reinforcement (2) connecting the two beads,
- a crown reinforcement, radially on the inside of the tread and radially on the outside of the radial carcass reinforcement, comprising a working reinforcement (3) and a protective reinforcement (4),
- the working reinforcement, radially on the inside of the protective reinforcement, comprising at least one layer (30) of working reinforcement,
- each layer of working reinforcement consisting of axially juxtaposed substantially circumferential strips (31, 231, 331, 431),
- each strip being made up of mutually parallel textile reinforcing elements (32, 232, 332, 432) coated with a polymer coating material (33, 233, 333, 433),
**characterized in that** each strip of at least one layer of working reinforcement is in contact, over at least its radially inner axial face, with a heat transfer element (34, 234, 334, 434) comprising at least one parallel substantially circumferential threadlike heat-conducting material, **in that** the thermal conductivity of a heat-conducting material of a heat transfer element is at least equal to 50 times the thermal conductivity of the polymer coating material of the textile reinforcing elements of the strip in contact with the heat transfer element, and **in that** the product of the thickness of a heat transfer element by the tension modulus of a heat transfer element is at most equal to 0.3 times the product of the thickness of the strip by the tension modulus of the strip.

2. Tyre according to Claim 1, **characterized in that** each strip (31, 231, 331, 431) of each layer of working reinforcement (30) is in contact, over at least its radially inner axial face, with a heat transfer element (34, 234, 334, 434) comprising at least one heat-conducting material.

3. Tyre according to either one of Claims 1 and 2, **characterized in that** a heat transfer element (34, 234, 334, 434) is made up of at least one substantially circumferential metal band.

4. Tyre according to any one of Claims 1 to 3, **characterized in that** a heat transfer element is made up of a single substantially circumferential metal band (34, 234) of which the axial width is equal to the axial width of the strip (31, 231) in contact with the heat transfer element.

5. Tyre according to any one of Claims 1 to 3, **characterized in that** a heat transfer element is made up of a plurality of axially juxtaposed substantially circumferential metal bands (334), of which the sum of the axial widths is at most equal to the axial width of the strip (331) in contact with the heat transfer element.

6. Tyre according to any one of Claims 1 to 3, **characterized in that** a heat transfer element is made up of a plurality of axially disjointed substantially circumferential metal bands (434) distributed over the axial width of the strip (431) in contact with the heat transfer element.

7. Tyre according to any one of Claims 3 to 6, **characterized in that** a substantially circumferential metal band (34, 234, 334, 434) comprises holes (235).

8. Tyre according to any one of Claims 3 to 7, **characterized in that** a substantially circumferential metal band (34, 234, 334, 434) comprises circular holes (235).

9. Tyre according to any one of Claims 3 to 8, **characterized in that** a substantially circumferential metal band (34, 234, 334, 434) comprises holes (235) of a diameter at most equal to half the width of the band.

10. Tyre according to any one of Claims 1 to 9, **characterized in that** a heat-conducting material of a heat transfer element (34, 234, 334, 434) is made of metal.

11. Tyre according to any one of Claims 1 to 10, **characterized in that** a heat-conducting material of a heat transfer element (34, 234, 334, 434) is aluminium.

12. Tyre according to Claim 11, **characterized in that** a heat transfer element (34, 234, 334, 434) has a thickness at most equal to 0.1 mm.

13. Tyre according to any one of Claims 1 to 12, **characterized in that** any heat transfer element (34, 234, 334, 434) has periodic geometric oscillations in a circumferential plane perpendicular to the axial direction.
